# EUROPÄISCHE PATENTANMELDUNG

(11) **EP 1 342 815 A2**
(43) Veröffentlichungstag der Anmeldung: **10.09.2003**
(21) Anmeldenummer: 03003993.7
(22) Anmeldetag: 24.02.2003
(51) Int. Cl.: C23G 5/00, B23K 1/20

(54) **Verfahren zum Löten von Aluminium**

(30) Priorität: 08.03.2002 DE 10210216
(71) Anmelder: Behr GmbH & Co., 70469 Stuttgart (DE)
(72) Erfinder: Englert, Peter, Dipl.-Ing. (FH), 74177 Bad Friedrichshall (DE); Jilg, Rüdiger, 71546 Aspach (DE); Trautwein, Ingo, 74321 Bietigheim-Bissingen (DE)
(74) Vertreter: Grauel, Andreas, Dr.

(57) **Zusammenfassung**

Die Erfindung betrifft ein Verfahren zum Löten von Aluminium, wobei eine reduzierende Plasmabehandlung der Oberfläche des Aluminiums durchgeführt und anschließend gelötet wird.

## Beschreibung

Die Erfindung betrifft ein Verfahren zum Löten von Aluminium gemäß dem Oberbegriff des Anspruches 1.

Zum Löten von Aluminium ist es erforderlich, dass die die Oberfläche des Aluminiums bedeckende Aluminiumoxidschicht vor dem Löten zumindest teilweise entfernt wird. In der Regel erfolgt dies mit Hilfe von Flussmitteln.

Es ist aus der EP 0 427 020 B1 bekannt, Leiterplatten, die mit elektronischen Bauelementen bestückt sind, zur Erhöhung der Lötfreudigkeit einer Vorbehandlungsstation zuzuführen, wobei die Vorbehandlungsstation durch eine Niederdruck-Prozesskammer gebildet wird, in der eine Plasmabehandlung mit einem Plasmagas, insbesondere mit einem Stoff aus der Gruppe O₂, H₂, Cl₂, N₂O, N₂, CF₄, FCKW oder einer Kombination mehrerer dieser Stoffe oder erfolgt. Alternativ kann ein Stoff aus der Gruppe der Edelgase, H₂ und alkylbildendes Gas oder eine Kombination mehrerer dieser Stoffe eingesetzt werden. Der Prozessdruck beträgt weniger als 2 x 10⁴ Pa und die Plasmaleistungsdichte mehr als 0,1 W/cm².

Die EP 0 729 397 B2 beschreibt ein Verfahren zum Löten einer Kupferschicht, die eine Oberflächenoxidschicht aufweist, wobei kein Flussmittel verwendet wird, gemäß dem die Kupferschicht der Einwirkung eines fluorhaltigen Plasmas unterworfen wird, welches wenigstens einen Teil der Oberflächenoxidschicht in fluorhaltige Verbindungen umwandelt, um eine Benetzung mit Lötmaterial zuzulassen, woraufhin Lötmaterial auf die fluorhaltige Oberflächenoxidschicht aufgebracht wird. Ferner wird ein entsprechendes Vorbehandlungssystem beschrieben.

Aus der WO 00/48779 ist eine Vorbereitung bspw. metallischer und/oder halbmetallischer Festkörperoberflächen mittels der Vorbehandlung mit Stickstoff als plasmaaktivem Gas, insbesondere unter Zugabe von Wasserstoff oder einem Edelgas, bekannt. Dieses Verfahren wird insbesondere zum Kontaktieren integrierter Schaltkreise verwendet.

Derartige Lötverfahren lassen noch Wünsche offen.

Ausgehend von diesem Stand der Technik ist es Aufgabe der Erfindung, ein verbessertes Verfahren zum flussmittelfreien Löten zur Verfügung zu stellen.

Diese Aufgabe wird gelöst durch ein Verfahren mit den Merkmalen des Anspruches 1. Vorteilhafte Ausgestaltungen sind Gegenstand der Unteransprüche.

Erfindungsgemäß wird ein Verfahren zum Löten von Aluminium vorgeschlagen, bei dem eine reduzierende Plasmabehandlung der Oberfläche des Aluminiums, d.h. insbesondere der Aluminiumoxidschicht sowie ggf. vorhandener Verunreinigungen, durchgeführt wird und anschließend der eigentliche Lötvorgang erfolgt. Eine derartige Vorbereitung von Bauteilen, insbesondere für Aluminium-Wärmetauscher, ermöglicht eine flussmittelfreie Lötung derselben.

Vorzugsweise wird als Prozessgas ein Plasma auf Basis von Edelgasen, Stickstoff, Wasserstoff, alkylbildender Gase, Fluoriden oder deren Gemische und/oder Verbindungen verwendet.

Vorzugseise erfolgt die Plasmabehandlung bei einem Druck von weniger als 2 x 10⁴ Pa, vorzugsweise von weniger als 10⁴ Pa, insbesondere von weniger als 200 Pa.

Vorzugsweise erfolgt die Plasmabehandlung bei einer Plasmaleistungsdichte von mehr als 0,1 W/cm², insbesondere von mehr als 0,2 W/cm².

Im folgenden wird die Erfindung anhand eines Ausführungsbeispiels im einzelnen erläutert.

Gemäß dem Ausführungsbeispiel werden Aluminium-Baugruppen für Aluminium-Wärmeübertrager, insbesondere für Wärmetauscher in einem Kraftfahrzeug, in einem Schutzgas-Durchlaufofen miteinander verlötet. Hierfür ist eine Oberflächenvorbehandlung der Baugruppen erforderlich, damit die die Oberflächen der Baugruppen bedeckende Aluminiumoxidschicht derart vorbehandelt ist, dass ein Verlöten der Aluminiumbauteile ohne ein die Aluminiumoxidschicht entfernendes Flussmittel möglich ist.

Hierfür durchlaufen die einzelnen Bauteile, im Falle einer frühen Vorbereitung auch bereits Aluminium-Bleche direkt von einem Coil, eine Prozesskammer, in der die Oberflächen einem reduzierenden Plasma ausgesetzt werden. Das Plasma beruht auf der Basis von Edelgasen, Stickstoff, Wasserstoff, alkylbildender Gase, Fluoriden oder deren Gemische und/oder Verbindungen hiervon. Dabei erfolgt die Plasmabehandlung bei einem Druck von weniger als 2 x 10⁴ Pa, vorliegend ca. 100 Pa, und einer Plasmaleistungsdichte von mehr als 0,1 W/cm², vorliegend ca. 0,8 W/cm². Dabei beträgt die Verweildauer in der Prozesskammer ca. 30 s bis 10 min. Die Prozesstemperatur beträgt ca. 180°C. Nach der Vorbehandlung erfolgt das flussmittelfreie Verlöten der einzelnen Bauteile, bspw. in einem Vakuumofen.

Es ist, gemäß einer besonders bevorzugten Variante, auch möglich, die Prozesskammer direkt vor einem Schutzgas-Durchlaufofen vorzusehen, so dass eine im wesentlichen kontinuierliche Behandlung und Verarbeitung der Bauteile möglich ist.

## Patentansprüche

1. Verfahren zum Löten von Aluminium, **dadurch gekennzeichnet, dass** eine reduzierende Plasmabehandlung der Oberfläche des Aluminiums durchgeführt und anschließend gelötet wird.

2. Verfahren nach Anspruch 1, **dadurch gekennzeichnet, dass** als Prozessgas ein Plasma auf Basis von Edelgasen, Stickstoff, Wasserstoff, alkylbildender Gase, Fluoriden oder deren Gemische und/oder Verbindungen verwendet wird.

3. Verfahren nach einem der vorhergehenden Ansprüche, **dadurch gekennzeichnet, dass** die Plasmabehandlung bei einem Druck von weniger als 2 x 10⁴ Pa, vorzugsweise von weniger als 10⁴ Pa, insbesondere von weniger als 200 Pa, erfolgt.

4. Verfahren nach einem der vorhergehenden Ansprüche, **dadurch gekennzeichnet, dass** die Plasmabehandlung bei einer Plasmaleistungsdichte von mehr als 0,1 W/cm², insbesondere 0,2 W/cm², erfolgt.

5. Verfahren nach einem der vorhergehenden Ansprüche, **dadurch gekennzeichnet, dass** Aluminium-Coils zur Verwendung als Teil eines Wärmetauschers oder Wärmetauscher der Plasmabehandlung unterzogen werden.

6. Vorrichtung zur Durchführung eines Verfahrens gemäß einem der Ansprüche 1 bis 5, wobei die Vorrichtung eine Prozesskammer für die Plasmabehandlung aufweist, die einer Lötanlage vorgeschaltet ist.

7. Vorrichtung nach Anspruch 6, **dadurch gekennzeichnet, dass** die Prozesskammer in einem Schutzgas-Durchlaufofen angeordnet ist.

8. Vorrichtung nach Anspruch 6, **dadurch gekennzeichnet, dass** die Prozesskammer vor einem Vakuum-Ofen angeordnet ist.
